# FASCICULE DE BREVET EUROPEEN

(11) **EP 0 863 301 B1**
(45) Date de publication et mention de la délivrance du brevet: **07.05.2003**
(21) Numéro de dépôt: 98400252.7
(22) Date de dépôt: 05.02.1998
(51) Int. Cl.: F02D 13/02, F01L 1/44

(54) **Procédé de contrôle de l'auto-allumage dans un moteur 4 temps**
Verfahren zur Steuerung von Selbstzündung in einem Viertaktmotor
Process for controlling auto ignition in a four stroke engine

(30) Priorité: 07.03.1997 FR 9702822
(43) Date de publication de la demande: 09.09.1998
(73) Titulaire: INSTITUT FRANCAIS DU PETROLE, 92852 Rueil-Malmaison Cedex (FR)
(72) Inventeur: Duret, Pierre, 78500 Sartrouville (FR); Lavy, Jacques, 78280 Guyancourt (FR)

(56) Documents cités:
- EP-A- 0 560 476
- WO-A-93/16276
- DE-A- 3 347 567
- GB-A- 2 134 596

## Description

La présente invention concerne les moteurs à combustion interne 4 temps à auto-allumage.

L'auto-allumage est un phénomène connu dans les moteurs 2 temps. Ce type de combustion présente des avantages au niveau des émissions de polluants : on obtient notamment de faibles émissions d'hydrocarbures et d'oxydes d'azote.

Pour les moteurs 4 temps, de très faibles émissions d'oxydes d'azote peuvent être obtenues. En outre, une remarquable régularité cyclique est réalisée lors de la combustion en auto-allumage.

L'auto-allumage est un phénomène qui permet d'initier la combustion grâce à des gaz brûlés résiduels, qui restent dans la chambre de combustion après la combustion.

L'auto-allumage est réalisé en contrôlant la quantité de gaz résiduels et son mélange avec les gaz frais (non encore brûlés). Les gaz résiduels (gaz brûlés chauds) initient la combustion des gaz frais grâce à une combinaison de température et à la présence d'espèces actives (radicaux).

Dans les moteurs 2 temps, la présence de gaz résiduels est "inhérente" à la combustion. En effet, lorsque la charge du moteur diminue, la quantité de gaz frais diminue et est naturellement remplacée par une quantité des gaz résiduels (gaz brûlés du ou des cycles précédents qui ne sont quasiment pas sortis du cylindre). Le moteur 2 Temps fonctionne donc avec une recirculation interne (ou EGR interne) des gaz brûlés à charge partielle. Toutefois, la présence de cet EGR interne n'est pas suffisante pour obtenir le fonctionnement souhaité en auto-allumage. Les travaux des chercheurs montrent aussi qu'il faut contrôler et limiter le mélange entre cet EGR interne et les gaz frais.

La technologie d'auto-allumage contrôlé appliquée au moteur 4T, est particulièrement intéressante car elle permet de faire fonctionner le moteur avec un mélange extrêmement dilué, avec des richesses très faibles et des émissions de NOx ultra faibles.

Cependant cette technologie se heurte à une difficulté technologique importante qui est le fait que pour l'obtenir sans bénéficier de l'effet EGR interne du moteur 2 temps, il est nécessaire soit d'augmenter très fortement le taux de compression du moteur (avec des problèmes de cliquetis à charge élevée), soit de réchauffer très fortement (plusieurs centaines de degrés C) les gaz frais admis, soit de combiner les deux phénomènes.

Des solutions pour diminuer les exigences en niveau de pression et de température pour les moteurs 4 temps peuvent partiellement être trouvées par le biais d'additifs appropriés dans le carburant. La demande de brevet française EN. 95/10798 illustre une solution de ce type.

Pour les moteurs 4 temps il est connu, par exemple par la demande internationale PCT, WO 93/16276 de combiner un calage variable de la distribution avec un système anti-retour à l'admission dans le but de diminuer les pertes par pompage à charge partielle. Cette solution permet alors de fonctionner avec la papillon d'admission le plus ouvert possible.

Il est également connu par le document DE 3 347 567 d'ouvrir simultanément les soupapes d'échappement et d'admission pendant la phase d'échappement du moteur de manière à introduire dans les tubulures d'échappement et d'admission des gaz brûlés.

Ces gaz brûlés sont ensuite réintroduits dans la chambre de combustion lors de la phase d'admission de ce moteur.

Ce procédé présente l'inconvénient non seulement de réintroduire des gaz brûlés à des températures insuffisantes pour assurer l'auto-allumage mais aussi d'autoriser un mélange des gaz brûlés avec le gaz frais ce qui diminue encore plus la température de ces gaz brulés.

De façon différente, la présente invention vise essentiellement à pallier les problèmes évoqués ci-dessus liés aux moteurs 4 temps fonctionnant en auto-allumage.

Il s'agit, selon la présente invention, d'essayer de reproduire les conditions de fonctionnement en auto-allumage des moteurs 2 temps, sur des moteurs 4 temps.

De façon particulièrement avantageuse, la présente invention représente une solution au problème de la dépollution des émissions d'oxydes d'azote, dans des moteurs 4 temps fonctionnant en mélange pauvre homogène.

Plus précisément, la présente invention concerne une commande variable de l'ouverture et de la fermeture des moyens de contrôle d'admission et d'échappement dans la chambre de combustion en fonction notamment de la charge du moteur.

Le procédé selon l'invention consiste à réaliser en combinaison et, à charge partielle :
a) une rétention prolongée dans le temps de gaz brûlés à l'intérieur de la chambre de combustion; et
b) une période d'admission de gaz frais qui, globalement, succède dans le temps à la période de rétention,
afin d'éviter le mélange des gaz frais avec les gaz brûlés et de contrôler la quantité de gaz brûlés retenus dans la chambre de combustion.

De façon spécifique. l'étape (a) est réalisée en retardant la fermeture de l'échappement au-delà du délai normal c'est-à-dire au-delà du point mort haut du piston.

Conformément à un mode de réalisation de l'invention, l'étape (a) est réalisée en retardant en outre l'ouverture de l'échappement vis-à-vis du fonctionnement normal, c'est-à-dire en empêchant l'ouverture de l'échappement avant le point mort bas.

En outre, l'étape (a) peut être réalisée en diminuant la durée d'ouverture de l'échappement vis-à-vis du fonctionnement normal c'est-à-dire en autorisant l'ouverture de l'échappement pendant environ la moitié de la remontée du piston uniquement, afin de limiter l'échappement d'une trop forte quantité de gaz brûlés.

Pour ce faire, il est possible de disposer un dispositif variable d'étranglement dans un conduit d'échappement en aval d'au moins une soupape d'échappement.

Une amélioration peut en outre consister à isoler thermiquement ledit conduit d'échappement entre la soupape d'échappement et ledit dispositif variable d'étranglement.

Par ailleurs, la période d'admission peut être raccourcie vis-à-vis du fonctionnement normal, l'ouverture de l'admission ayant lieu bien après le point mort haut et la fermeture de l'admission ayant lieu avant le point mort bas de sorte que l'admission est ouverte après la fermeture de l'échappement, uniquement pendant la durée nécessaire à l'introduction de gaz frais requis pour la charge du moteur.

Sans sortir du cadre de l'invention, la période d'admission peut être décalée vis-à-vis du fonctionnement normal, l'ouverture de l'admission ayant lieu bien après le point mort haut et la fermeture de l'admission ayant lieu bien après le point mort bas de sorte que l'admission est ouverte au-delà de la fermeture de l'échappement et est fermée pendant la compression.

De façon particulière, l'admission peut être fermée juste avant le point mort bas.

Parallèlement le procédé, selon l'invention, peut consister à équiper le conduit d'admission d'une vanne anti-retour.

D'une façon particulière, le mélange carburé peut être introduit sous pression, en début de compression après remplissage du cylindre par les gaz brûlés.

Dans le cas où une source d'air sous pression est utilisée à l'admission, cet air peut en outre être utilisé pour pulvériser le carburant dans la chambre de combustion.

Selon une autre caractéristique, les gaz frais peuvent être chauffés avant d'être introduits dans le moteur.

D'autres caractéristiques, avantages et particularités de la présente invention apparaîtront mieux à la lecture de la description qui va suivre, faite à titre illustratif et nullement limitatif, en référence aux dessins annexés sur lesquels :
- la figure 1 est un schéma qui montre la durée d'ouverture de l'échappement selon un mode de réalisation de l'invention;
- la figure 2 est un graphe qui montre les évolutions parallèles du piston et d'une soupape d'échappement selon le même mode de réalisation de l'invention;
- la figure 3 est un schéma qui montre la durée d'ouverture de l'échappement selon un autre mode de réalisation de l'invention.
- La figure 4 est un graphe qui montre les évolutions parallèles du piston et d'une soupape d'échappement selon l'autre mode de réalisation de l'invention.
- La figure 5 est un schéma relatif à la durée d'ouverture de l'échappement selon un troisième mode de réalisation de l'invention;
- la figure 6 est un graphe qui illustre les évolutions parallèles du piston et d'une soupape d'échappement conformément au troisième mode de réalisation de l'invention;
- la figure 7 est une coupe simplifiée d'une sortie échappement d'un moteur selon l'invention;
- la figure 8 est une coupe simplifiée d'une admission d'un moteur 4 temps selon l'invention;
- la figure 9 est un schéma qui montre les durées d'ouverture respectivement de l'échappement et de l'admission selon le mode de réalisation de la figure 8;
- la figure 10 est une courbe qui montre l'évolution dans le temps respectivement d'une soupape d'admission (courbe A) et d'une soupape d'échappement (courbe E).
- les figures 11 et 13 sont des schémas qui montrent les durées d'ouverture respectivement de l'admission et de l'échappement pour deux autres modes de réalisation de l'invention;
- les figures 12 et 14 concernent des courbes des levées de soupapes pour les modes de réalisation des figures 11 et 13 respectivement.

Enoncé de façon générale, l'objet de l'invention est, à charge partielle, de garder enfermé dans le cylindre et la chambre de combustion, une quantité importante de gaz brûlés résiduels, dénommés **EGR** dans la suite de la description. Il s'agit en outre, conformément à l'invention, d'avoir le moins de mélange possible, à l'intérieur de la chambre de combustion entre l'**EGR** et les gaz frais c'est-à-dire nouvellement introduits à chaque admission. Ceci implique de n'introduire les gaz frais qu'une fois l'EGR complètement piégé à l'intérieur de la chambre de combustion. De préférence, les gaz frais seront introduits le plus tard possible, juste avant la compression.

Ce type de fonctionnement n'est préconisé qu'aux charges partielles ; en dehors de ces plages de fonctionnement, le moteur fonctionnera de façon conventionnelle c'est-à-dire avec une admission ouverte pendant la descente du piston et un échappement la remontée du piston. Un léger recouvrement desdites plages étant toutefois recommandé afin d'obtenir de meilleures performances.

La présente invention propose donc, à charges partielles, de réaliser en combinaison :
(a) une rétention, prolongée dans le temps, de gaz brûlés à l'intérieur de la chambre de combustion;
(b) une période d'admission de gaz frais qui, globalement, succède dans le temps à la période de rétention des gaz brûlés.

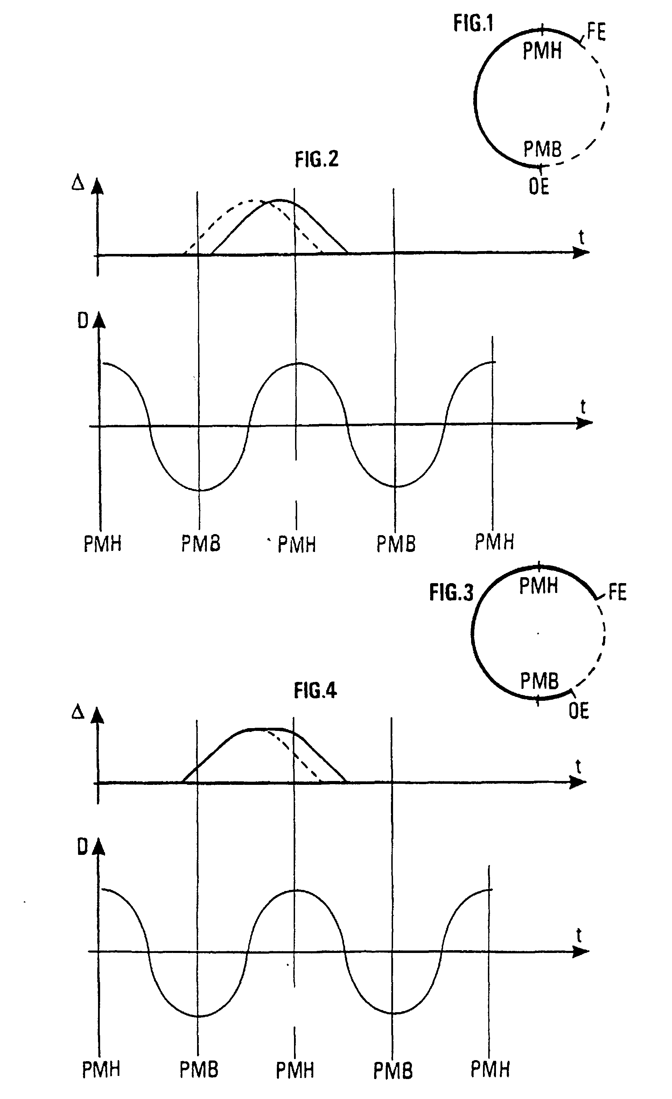

Pour réaliser ces étapes, plusieurs solutions sont envisageables :
- dans le cas d'un moteur à soupape(s) d'échappement actionnée(s) mécaniquement par cames, la période d'ouverture de la (ou des) soupape(s) d'échappement sera fortement retardée dans le cycle (par rapport au moment d'ouverture plus conventionnel utilisé à charge élevée) pour se terminer largement dans la phase de redescente du piston (début de l'admission sur moteur conventionnel). Ce retard pourra s'obtenir soit par décalage de l'ensemble de la loi d'ouverture de l'échappement (figure 1 et figure 2), soit par augmentation de la durée de l'ouverture de l'échappement (figure 3 et figure 4). Des systèmes mécaniques adaptés de distribution variable permettront d'obtenir l'un ou l'autre cas. Sur les figures 2 et 4, la loi classique d'ouverture des soupapes d'échappement est représentée en pointillés dans le graphe donnant la levée de la soupape Δ en fonction du temps.
- dans le cas d'un moteur à soupapes d'échappement à ouverture totalement variable en levée et position angulaire dans le cycle (distributions par commandes électromagnétiques ou électrohydrauliques), les cas ci-dessus pourront être bien entendu utilisés, mais il pourra alors être plus avantageux d'une part, d'éviter qu'une partie de l'**EGR** interne sorte dans l'échappement et retourne ensuite dans le cylindre (vers le **PMH** piston), et d'autre part, d'ouvrir l'échappement pendant le temps le plus court possible de façon à ne laisser échapper que la quantité juste souhaitable et à mieux séparer le processus suivant d'admission.

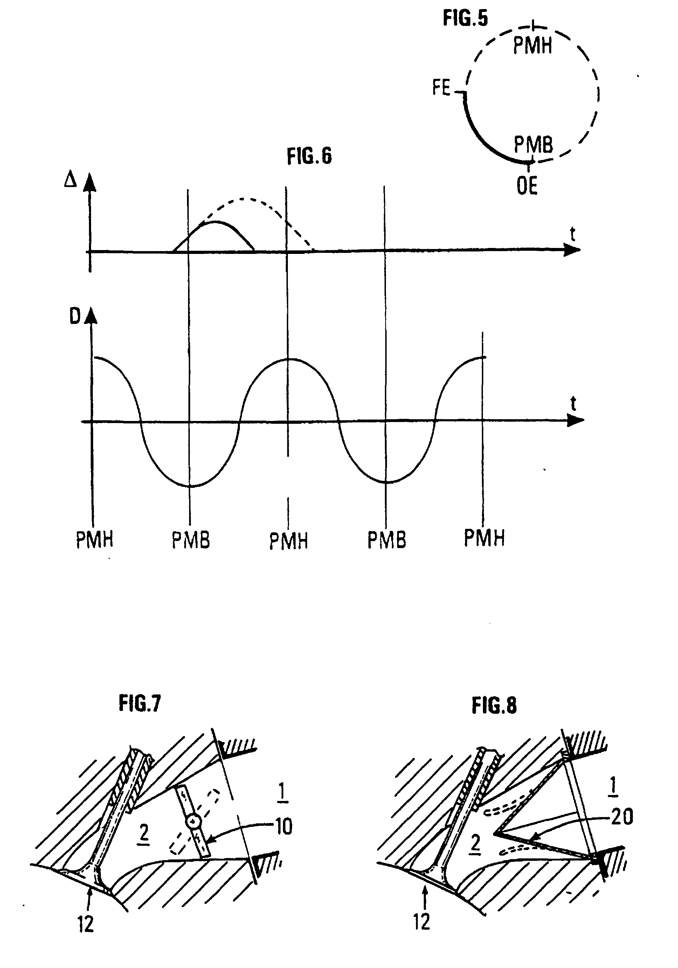

Ainsi les figures 5 et 6 montrent que l'échappement est ici ouvert pendant une courte durée, de façon à ce qu'il ne soit pas complet. L'ouverture de l'échappement interviendra alors préférentiellement vers le point mort bas tandis que la fermeture aura lieu vers le milieu de la compression soit environ 45° vilebrequin après l'ouverture de l'échappement.

Des améliorations à ces deux solutions sont aussi possibles. En effet dans le cas de la distribution mécanique, il peut être particulièrement intéressant de placer un dispositif d'étranglement (par ex. volet papillon ou boisseau,...) en aval de la (ou des) soupape(s) d'échappement de façon à accroître l'effet **EGR** interne. Cela peut même permettre de réduire le besoin de retarder l'ouverture de l'échappement.

La figure 7 montre un exemple d'implantation d'un élément de vannage 10 dans le conduit d'échappement 1, qui améliore ainsi l'effet premier de l'invention. Les autres éléments de cet environnement ne sont ni décrits ni référencés puisque connus par ailleurs en eux-mêmes.

Par ailleurs, on ne sortira pas du cadre de l'invention si des boisseaux tournants sont utilisés à la place des soupapes pour obtenir les lois appropriées et souhaitées d'ouverture de l'échappement.

Un autre aspect de l'invention vise en outre à faire débuter l'admission le plus tard possible, après la fin de l'échappement. Ceci permet de retarder les possibilités de mélange entre gaz frais et gaz brûlés, autrement dit d'améliorer la stratification.

Une solution pour réaliser cet effet peut consister, comme illustré sur la figure 8, à placer un clapet anti-retour 20 dans le conduit d'admission 2, juste en amont d'une soupape d'admission 12.

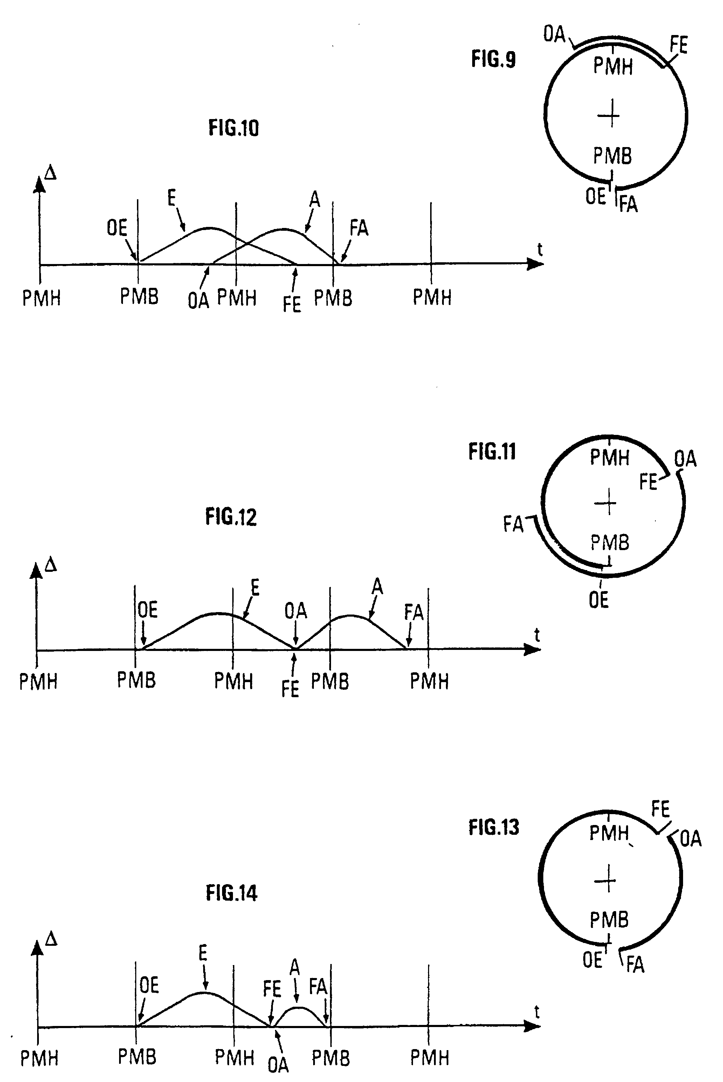

Un clapet anti-retour disposé à l'admission permet, dans le cas illustré par les figure 9 et 10, d'empêcher un retour des gaz brûlés dans l'admission. Ce phénomène de "backflow" pourrait en effet se produire dans le cas où la soupape d'admission s'ouvre bien avant la fin de l'échappement. Le croisement des soupapes est alors trop important. Le clapet 20 autorisera alors le début de l'admission uniquement lorsque la pression dans la tubulure d'admission, en amont du clapet 20, est supérieure à la pression du cylindre. Si, comme le montre les figures 9 et 10, l'échappement reste ouvert au-delà du point mort haut, pendant le début de la descente du piston, la pression dans le cylindre restera alors voisine de la pression atmosphérique pendant ce délai. Elle ne commencera à chuter que lorsque l'échappement sera fermé, soit ici environ 45° après le point mort haut. Les clapets 20 s'ouvrent donc uniquement à ce moment de sorte que l'admission réelle a bien lieu après l'échappement.

Dans le mode de réalisation des figures 11 et 12, la loi d'ouverture des soupapes est volontairement retardée. Ici l'ouverture de l'admission se fait juste après la fermeture de l'échappement, bien après le point mort haut. Ce retard peut être obtenu soit en modifiant la durée d'ouverture et la loi de levée des soupapes, soit par décalage complet de l'admission dans le temps. Au plan technologique la première solution est assez complexe tandis que la deuxième peut être obtenue par un déphasage de l'arbre à cames, ce qui est aujourd'hui tout à fait maîtrisé.

Le mode de réalisation des figures 11 et 12 rend le clapet anti-retour tout à fait nécessaire afin d'éviter tout back-flow pendant le recouvrement des soupapes qui a lieu pendant la compression, de façon à maintenir un taux de compression élevé dans la chambre de combustion.

Dans le cas d'un moteur à soupapes d'admission commandées de façon totalement variable, telle que des distributions par commandes électro-magnétiques ou électrohydrauliques, le clapet anti-retour 20 n'est pas indispensable.

En effet on peut alors ouvrir l'admission juste après la fin de l'échappement mais, comme représenté sur les figures 13 et 14, refermer rapidement l'admission, avant le point mort bas c'est-à-dire avant le début de la compression. On ouvrira préférentiellement l'admission pour le temps minimum juste nécessaire pour introduire la quantité de gaz frais requise pour la charge donnée. Un pilotage automatique et individuel des soupapes, tout à fait réalisable au plan technologique, peut permettre une telle séquence.

Un autre cas très important doit entrer dans le cadre de l'invention. En effet quel que soit le type de distribution utilisé, il peut être très avantageux de rechercher un remplissage maximum en gaz brûlés résiduels afin de faciliter la combustion en auto-allumage même dans les conditions de charge les plus faibles. Pour cela, une solution intéressante peut en outre-être de retarder encore plus la fermeture de l'échappement, par exemple presque jusqu'au début de compression cylindre et de n'ouvrir la soupape d'admission que pendant le début de compression cylindre. Dans ce cas, la charge fraîche en mélange air/carburant doit être introduite sous une pression légèrement supérieure à celle de la pression cylindre. De l'air comprimé doit donc être utilisé provenant d'une source de pression : cette source de pression peut être un compresseur (volumétrique type Roots par exemple, ou à vis, ou à piston qui peut d'ailleurs être l'un des pistons du moteur lui-même,....) entraîné soit mécaniquement soit électriquement. L'air comprimé nécessaire à ce mode de réalisation peut en outre être utilisé pour assurer l'atomisation et la pulvérisation du carburant. Pour résumer ce dernier cas, tout se passe comme si le moteur est rempli dans un premier temps au maximum par des gaz résiduels, et dans un deuxième temps suralimenté par un mélange air/carburant qui vient fournir la charge fraîche sans prendre la place des gaz brûlés et donc sans diminuer leur quantité enfermée.

On ne sortira pas du cadre de l'invention si des boisseaux tournants sont utilisés à la place des soupapes pour obtenir les lois appropriés et souhaitées d'ouverture et fermeture de l'admission.

Ainsi suivant la description ci-dessus, le moteur pourra fonctionner d'une manière conventionnelle dans les charges élevées, avec la période d'ouverture échappement pendant la remontée du piston (suivant la détente) et la période d'admission pendant la descente du piston (précédant la compression). Dans ces conditions l'EGR interne et son absence de mélange avec les gaz frais ne seront pas spécialement recherchés, et les périodes d'échappement et d'admission pourront admettre un certain recouvrement ou croisement nécessaire à l'obtention d'un couple élevé. Lorsqu'un dispositif d'étranglement de l'échappement tel que 10 sera utilisé, celui-ci sera bien entendu largement ouvert. Le dispositif anti-retour à l'admission 20 ne devrait pas apporter d'effets négatifs au fonctionnement à charges élevées, excepté peut-être une légère perte de charge à haut régime.

La transition entre le mode conventionnel à charge élevée et à allumage commandé par étincelle, et le mode à charge partielle et à auto-allumage contrôlé suivant l'invention se fera donc par variation des paramètres utilisés pour le contrôle de l'**EGR** interne et du minimum de mélange entre **EGR** interne et gaz frais qui sont donc :
- la variation de la loi d'ouverture de l'échappement (au minimum par calage variable)
- la position du dispositif d'étranglement de l'échappement (s'il y en a un),
- la variation de la loi d'ouverture de l'admission (si elle est utilisée).

Dans le cas d'un moteur multisoupapes, il peut aussi être prévu d'avoir une partie des soupapes dont l'ouverture sera telle que définie suivant l'invention et une autre partie des soupapes aura des lois d'ouverture plus conventionnelles, permettant d'assurer un bon remplissage du moteur aux charges élevées. Ainsi, aux charges élevées, toutes les soupapes seraient actives alors qu'aux charges partielles le fonctionnement en auto-allumage sera recherché, l'ouverture des soupapes à loi d'ouverture traditionnelle serait désactivée, de façon à n'autoriser que l'ouverture des soupapes fonctionnant suivant l'invention.

Dans le cas où la variation de ces paramètres de contrôle suivant l'invention ne serait toutefois pas suffisante pour obtenir le fonctionnement en combustion par auto-allumage, d'autres actions connues comme le réchauffage des gaz frais admis, l'augmentation du taux de compression,... pourront être utilisées en complément. Néanmoins, il est attendu de l'invention qu'au cas où elle ne permette pas à elle seule d'atteindre le mode de combustion en auto-allumage contrôlé, elle permette au moins de diminuer la nécessité d'actions complémentaires (par exemple en réduisant le niveau de réchauffage requis pour les gaz frais).

Pour pouvoir bénéficier au mieux de l'énergie thermique des gaz résiduels dans le cas d'un moteur fonctionnant suivant l'invention, le conduit d'échappement pourra être isolé à partir de la soupape d'échappement (par céramisation, circuit d'eau adapté,...). Cette isolation pourra se poursuivre au moins jusqu'à l'emplacement du volet d'étranglement 10 de l'échappement (dans le cas où il y en a un).

Enfin, on ne sortira pas du cadre de l'invention si l'étincelle de commande de l'allumage conventionnel est maintenue pendant le fonctionnement en mode d'auto-allumage contrôlé.

## Revendications

1. Procédé de contrôle de l'auto-allumage dans un moteur 4 temps comprenant une commande variable de l'ouverture et de la fermeture des moyens de contrôle d'admission et d'échappement dans la chambre de combustion en fonction notamment de la charge du moteur, **caractérisé en ce qu'**il consiste à réaliser en combinaison et, à charge partielle :
a) une rétention prolongée dans le temps de gaz brûlés à l'intérieur de la chambre de combustion; et
b) une période d'admission de gaz frais qui, globalement, succède dans le temps à la période de rétention,
afin de minimiser le mélange des gaz frais avec les gaz brûlés et de contrôler la quantité de gaz brûlés retenus dans la chambre de combustion.

2. Procédé de contrôle selon la revendication 1, **caractérisé en ce que** l'étape (a) est réalisée en retardant la fermeture de l'échappement au-delà du délai normal c'est-à-dire au-delà du point mort haut du piston.

3. Procédé selon la revendication 2, **caractérisé en ce que** l'étape (a) est réalisée en retardant en outre l'ouverture de l'échappement vis-à-vis du fonctionnement normal, c'est-à-dire en empêchant l'ouverture de l'échappement avant le point mort bas.

4. Procédé de contrôle selon la revendication 1, **caractérisé en ce que** l'étape (a) est réalisée en diminuant la durée d'ouverture de l'échappement vis-à-vis du fonctionnement normal c'est-à-dire en autorisant l'ouverture de l'échappement pendant seulement une partie de la remontée du piston uniquement, afin de limiter l'échappement d'une trop forte quantité de gaz brûlés.

5. Procédé selon l'une quelconque des revendications précédentes, **caractérisé en ce qu'**il consiste en outre à disposer un dispositif variable d'étranglement (10) dans un conduit d'échappement (1) en aval d'au moins une soupape d'échappement.

6. Procédé selon la revendication 5, **caractérisé en ce qu'**il consiste en outre à isoler thermiquement ledit conduit d'échappement entre la soupape d'échappement et ledit dispositif variable d'étranglement (10).

7. Procédé selon la revendication 2, 3 ou 4, **caractérisé en ce que** la période d'admission est raccourcie vis-à-vis du fonctionnement normal, l'ouverture de l'admission ayant lieu bien après le point mort haut et la fermeture de l'admission ayant lieu avant le point mort bas de sorte que l'admission est ouverte après la fermeture de l'échappement, uniquement pendant la durée nécessaire à l'introduction de gaz frais requis pour la charge du moteur.

8. Procédé selon la revendication 2 ou 3, **caractérisé en ce que** la période d'admission est décalée vis-à-vis du fonctionnement normal, l'ouverture de l'admission ayant lieu bien après le point mort haut et la fermeture de l'admission ayant lieu bien après le point mort bas de sorte que l'admission est ouverte au-delà de la fermeture de l'échappement et est fermée pendant la compression.

9. Procédé selon l'une quelconque des revendications 2 ou 3, **caractérisé en ce que** l'admission est fermée juste avant le point mort bas.

10. Procédé selon l'une quelconque des revendications 8 ou 9, **caractérisé en ce qu'**il consiste à équiper le conduit d'admission d'une vanne anti-retour.

11. Procédé selon l'une quelconque des revendications précédentes, **caractérisé en ce qu'**un mélange carburé est introduit sous pression, en début de compression après remplissage du cylindre par les gaz brûlés.

12. Procédé selon l'une quelconque des revendications précédentes, **caractérisé en ce que** l'on utilise une source d'air sous pression, et **en ce que** l'air sous pression est en outre utilisé pour pulvériser du carburant directement dans la chambre de combustion.

13. Procédé selon l'une quelconque des revendications précédentes, **caractérisé en ce que** lesdits gaz frais sont chauffés avant d'être introduits dans ledit moteur.

14. Procédé de contrôle selon la revendication 1, **caractérisé en ce que** dans le cas d'un moteur comprenant au moins une soupape d'échappement actionnée mécaniquement, la période d'ouverture de la ou desdites soupapes sera fortement retardée dans le cycle pour se retrouver largement dans la phase de redescente du piston.

15. Procédé selon la revendication 2, **caractérisé en ce qu'**une partie de l'**EGR** interne sorte dans l'échappement et retourne ensuite dans le cylindre.

## Patentansprüche

1. Verfahren zur Steuerung der Selbstzündung in einem Viertaktmotor, umfassend eine variable Steuerung der Öffnung und des Schließens der Einlassund Auslasskontrollmittel in der Brennkammer in Abhängigkeit vor allem von der Motorlast, **dadurch gekennzeichnet, dass** es darin besteht, in Kombination und bei Teillast durchzuführen:
a) ein verlängertes Zurückhalten in dem Takt von verbrannten Gasen in der Brennkammer; und
b) eine Einlassperiode von frischen Gasen, die im allgemeinen in dem Takt mit Rückhalteperiode nachfolgt, um das Gemisch der frischen Gase mit den verbrannten Gasen zu minimieren und die Menge von in der Brennkammer zurückgehaltenen verbrannten Gasen zu steuern.

2. Steuerungsverfahren nach Anspruch 1, **dadurch gekennzeichnet**, das die Stufe (a) unter Verzögerung des Schließens des Auslasses gegenüber dem normalen Zeitraum durchgeführt wird, d.h. hinter dem oberen Totpunkt des Kolbens.

3. Steuerungsverfahren nach Anspruch 2, **dadurch gekennzeichnet**, das die Stufe (a) im übrigen unter Verzögerung der Öffnung des Auslasses gegenüber dem normalen Betrieb durchgeführt wird, d.h. unter Verhindern der Öffnung des Auslasses vor dem unteren Totpunkt.

4. Steuerungsverfahren nach Anspruch 1, **dadurch gekennzeichnet, dass** die Stufe (a) unter Verminderung der Dauer der Öffnung des Auslasses gegenüber normalem Betrieb durchgeführt wird, d.h. indem eine Öffnung des Auslasses während lediglich einem Teil des Wiederanstiegs des Kolbens einzig dazu zugelassen wird, das Auslassen einer zu starken Menge verbrannter Gase zu begrenzen.

5. Verfahren nach einem der vorhergehenden Ansprüche, **dadurch gekennzeichnet, dass** es im übrigen darin besteht, eine variable Drosselvorrichtung (10) in einer Auspuffleitung (1) hinter wenigstens einem Auslassventil vorzusehen.

6. Verfahren nach Anspruch 5, **dadurch gekennzeichnet, dass** es im übrigen darin besteht, thermisch die Auspuffleitung zwischen dem Auslassventil und der variablen Drosselvorrichtung(10) zu isolieren.

7. Verfahren nach einem der Ansprüche 2, 3 oder 4, **dadurch gekennzeichnet, dass** die Einlassperiode gegenüber dem normalen Betrieb verkürzt ist, wobei die Öffnung des Einlasses direkt nach dem oberen Totpunkt stattfindet und das Schließen des Einlasses vor dem unteren Totpunkt stattfindet, derart, dass der Einlass nach dem Schließen des Auslasses lediglich für die Dauer geöffnet ist, welche zur Einführung frischer Gase für die Motorlast erforderlich ist.

8. Verfahren nach Anspruch 2 oder 3, **dadurch gekennzeichnet, dass** die Einlassperiode gegenüber dem normalen Betrieb verschoben ist, wobei die Öffnung des Einlasses genau hinter dem oberen Totpunkt und das Schließen des Einlasses genau nach dem unteren Totpunkt stattfindet, derart, dass der Einlass hinter dem Schließen des Auslasses offen und während der Kompression geschlossen ist.

9. Verfahren nach einem der Ansprüche 2 oder 3, **dadurch gekennzeichnet, dass** der Einlass genau vor dem unteren Totpunkt geschlossen ist.

10. Verfahren nach einem der Ansprüche 8 oder 9, **dadurch gekennzeichnet, dass** es darin besteht, die Einlassleitung mit einem Antirücklaufventil auszurüsten.

11. Verfahren nach einem der vorhergehenden Ansprüche, **dadurch gekennzeichnet, dass** ein Treibstoffgemisch unter Druck am Kompressionsanfang nach Füllen des Zylinders durch die verbrannten Gase eingeführt wird.

12. Verfahren nach einem der vorhergehenden Ansprüche, **dadurch gekennzeichnet, dass** man eine Luftquelle unter Druck verwendet, und dadurch, dass die Luft unter Druck im übrigen verwendet wird, um den Treibstoff direkt in der Brennkammer zu zerstäuben.

13. Verfahren nach einem der vorhergehenden Ansprüche, **dadurch gekennzeichnet, dass** die Frischgase erwärmt werden, bevor sie in den Motor eingeführt werden.

14. Steuerungsverfahren nach Anspruch 1, **dadurch gekennzeichnet, dass** in dem Fall, dass ein Motor wenigstens ein mechanisch betätigtes Auslassventil umfasst, die Öffnungsperiode des oder der Ventile in dem Zyklus stark verzögert sein wird, um sich weitgehend in der Phase des Wiederanstiegs des Kolbens zu befinden.

15. Verfahren nach Anspruch 2, **dadurch gekennzeichnet, dass** ein Teil der internen EGR (Abgasrückführung) in den Auspuff austritt und anschließend in den Zylinder zurückkehrt.

## Claims

1. Process for controlling the auto-ignition in a 4-stroke engine comprising variable control of the opening and the closing of the means for controlling induction and exhaust in the combustion chamber as a function in particular of the load of the engine, **characterised in that** it consists in producing in combination and under part load:
a) temporally prolonged retention of burnt gases inside the combustion chamber, and
b) a period of induction of fresh gases which, as a whole, temporally succeeds the period of retention, in order to minimise the mixing of the fresh gases with the burnt gases and to control the quantity of burnt gases retained in the combustion chamber.

2. Control process according to claim 1, **characterised in that** step (a) is produced by retarding the closure of the exhaust beyond the normal time, i.e. beyond the top dead centre position of the piston.

3. Process according to claim 2, **characterised in that** step (a) is produced by additionally retarding the opening of the exhaust in relation to normal operation, i.e. by preventing the opening of the exhaust before the bottom dead centre position.

4. Control process according to claim 1, **characterised in that** step (a) is produced by reducing the opening period of the exhaust in relation to normal operation, i.e. by allowing the opening of the exhaust during only a portion of the reascending stroke of the piston alone in order to limit the exhaust of an excessive quantity of burnt gases.

5. Process according to any one of the preceding claims, **characterised in that** it consists in addition in disposing a variable throttling device (10) in an exhaust passage (1) downstream of at least one exhaust valve.

6. Process according to claim 5, **characterised in that** it consists in addition in thermally insulating said exhaust passage between the exhaust valve and said variable throttling device (10).

7. Process according to claim 2, 3 or 4, **characterised in that** the induction period is shortened in relation to normal operation, the opening of the intake taking place well after the top dead centre position and the closing of the intake taking place before the bottom dead centre position so that the intake is open after the closing of the exhaust, solely during the period necessary for the introduction of fresh gases required for the engine load.

8. Process according to claim 2 or 3, **characterised in that** the induction period is offset in relation to normal operation, the opening of the intake taking place well after the top dead centre position and the closing of the intake taking place well after the bottom dead centre position so that the intake is open beyond the closing of the exhaust and is closed during compression.

9. Process according to any one of claims 2 or 3, **characterised in that** the intake is closed just before the bottom dead centre position.

10. Process according to any one of claims 8 or 9, **characterised in that** it consists in fitting the intake passage with a non-return valve.

11. Process according to any one of the preceding claims, **characterised in that** a carburetted mixture is introduced under pressure, at the start of compression after filling of the cylinder by the burnt gases.

12. Process according to any one of the preceding claims, **characterised in that** a source of air under pressure is used, and **in that** the air under pressure is in addition used to atomise the fuel directly in the combustion chamber.

13. Process according to any one of the preceding claims, **characterised in that** said fresh gases are heated before being introduced into said engine.

14. Control process according to claim 1, **characterised in that** in the case of an engine comprising at least one exhaust valve operated mechanically, the period of opening of said valve or valves will be greatly retarded in the cycle to occur largely in the phase in which the piston is descending again.

15. Process according to claim 2, **characterised in that** a portion of the internal exhaust gas recirculation passes out into the exhaust and then returns to the cylinder.
